Europäisches Patentamt

European Patent Office

Office européen des brevets

(11) Publication number: **0 019 292**
**B1**

(12)    **EUROPEAN PATENT SPECIFICATION**

(45) Date of publication of patent specification: **09.02.83**

(51) Int. Cl.³: **B 27 G  19/02,** B 27 B  5/18

(21) Application number: **80102757.4**

(22) Date of filing: **19.05.80**

(54)  **Improvements in sawing machines.**

(30) Priority: **22.05.79 IT  340879**

(43) Date of publication of application:
**26.11.80 Bulletin 80/24**

(45) Publication of·the grant of the patent:
**09.02.83 Bulletin 83/6**

(84) Designated Contracting States:
**AT BE CH DE FR GB LI LU NL SE**

(56) References cited:
**DE - A - 2 435 828**
**GB - A - 1 232 800**
**US - A - 3 627 000**
**US - A - 4 096 789**

(73) Proprietor: **GIBEN IMPIANTI S.p.A.**
**24, Via Garganelli**
**I-40065 Pianoro (Bologna) (IT)**

(72) Inventor: **Benuzzi, Gino**
**5, Via Angelo Custode**
**I-40141 Bologna (IT)**

(74) Representative: **Porsia, Dino, Dr.**
**c/o Succ. Ing. Fischetti & Weber Via Caffaro 3**
**I-16124 Genova (IT)**

Courier Press, Leamington Spa, England.

Improvements in sawing machines

The present invention relates to improvements in sawing machines of the type comprising horizontal workpiece support table having a straight longitudinal slot defining a cutting line, a sawing tool mounted on a carriage reciprocably movable along a path parallel to and beneath the cutting line, and a longitudinal pressure bar arranged above the said workpiece support table, which pressure bar extends along the whole length of the cutting line and can be raised and lowered with respect to the said workpiece table so as to be capable of clamping thereon the workpiece to be sawn.

More particularly, the invention relates to some safety devices which, within the scope of the claims can be adopted in the sawing machines of the above mentioned type.

In a first safety device, there is provided a protective barrier apron which covers both sides of the cutting line. The protective apron consists of two apron rods arranged above the cutting line, at the sides of the pressure bar. On the apron rods there are hingedly mounted, with possibility of swinging within a predetermined swinging angle around a longitudinal axis parallel to or coincident with the axis of the apron bar, a plurality of slats arranged side by side. The apron rods may be rotated so as to bring the slats from a raised position, in which there is free access to the cutting line, to a lowered position, in which the slats forming the apron either rest on the workpiece being sawn or they rest on the workpiece table, and in any case they do not permit the access to the cutting line during the working cycle of the cutting tools. The rotation of the apron rods, and consequent raising or lowering of the apron slats, is coordinated with the raising or lowering movement of the pressure bar.

In a second safety device, mounted on each side of the pressure bar there are provided contact bars which extend along the whole length of the said pressure bar, and are movable therewith in the raising and lowering motion. The said contact bars are mounted hanging with respect to the pressure bar in such a manner as to be capable of effecting a limited vertical movement. More precisely, on each side of the cutting line, an inner contact bar is arranged in proximity of the cutting line, and whenever the pressure bar is lowered to block the workpiece on the support table, the said inner contact bar comes into contact with the workpiece prior to the pressure bar, is consequently displaced upwardly and acts on a microswitch which controls the operation of the cutting tools. A second, outer, contact bar is also provided which is located exteriorly with respect to the said first inner contact bar, and which normally hangs from the pressure bar so that its lower end is located at the same level as the lower end of the pressure bar which actually presses and block the workpiece. If, during the lowering of the pressure bar, an extraneous body is interposed between the pressure bar and the support table or the workpiece to be sawed, the outer contact bar will be relatively lifted by the presence of said body, with respect to the pressure bar being lowered, and will act on a microswitch which will suitably prevent the operation of the cutting tools.

In a third safety device, the access for inspection, repair or substitution of the cutting tools is permitted only upon removal of a protective hood which is secured to the machine casing by means of a threaded rod the free end of which cooperates with a microswitch controlling the operation of the said cutting tools, in such a manner that upon unscrewing of the threaded rod for removal of the hood, the motors of the cutting tools are stopped, while the unscrewing operation takes a time sufficient to allow the cutting tools to come to a complete stop.

The above and other features and the advantages deriving therefrom, are described in detail with reference to the attached drawings, in which:

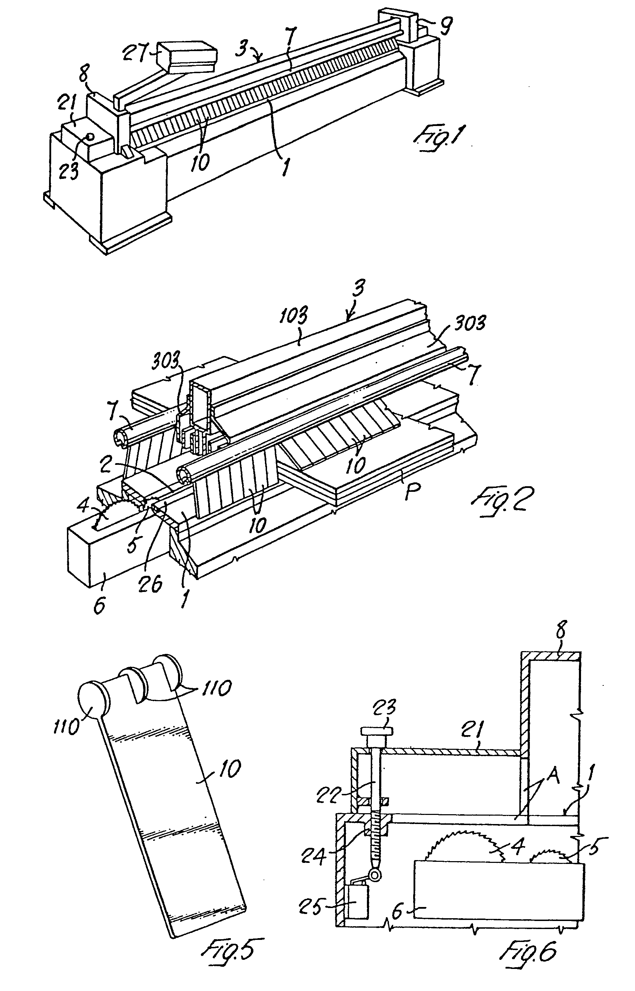

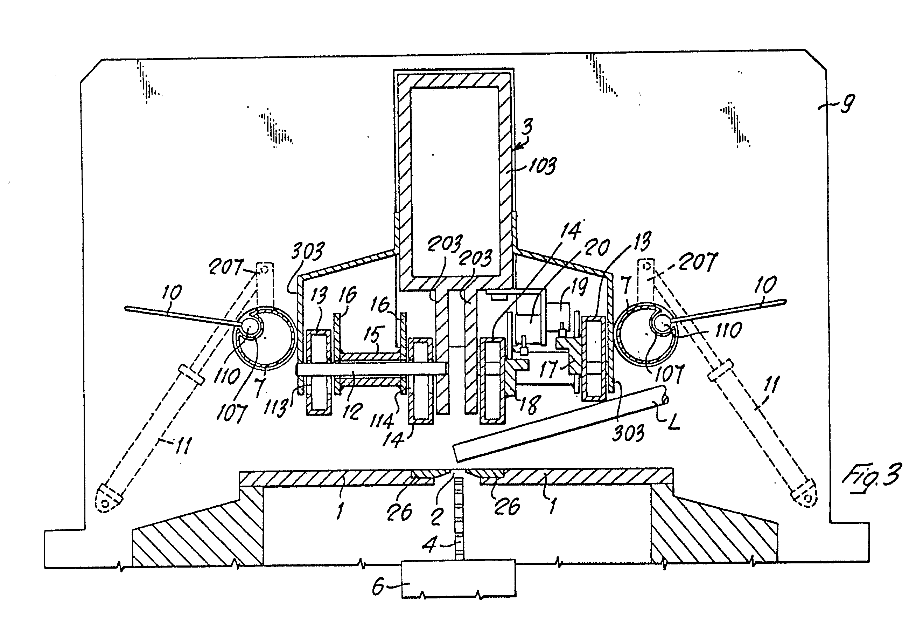

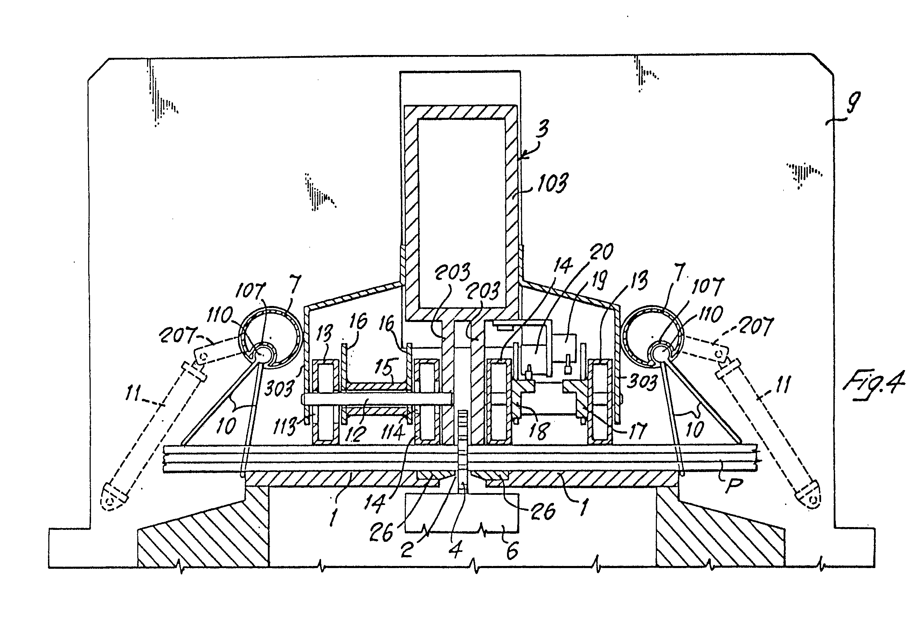

Figure 1 is a perspective view of an improved sawing machine according to an embodiment of the invention; Figure 2 is a perspective fragmentary view of a detail of the sawing machine; Figure 3 is a transverse section of a detail of the sawing machine, with the pressure bar raised; Figure 4 is a transverse section of a detail of the sawing machine, similar to Figure 3, with the pressure bar lowered; Figure 5 is a perspective view of a slat forming part of the protective barrier apron provided at both sides of the cutting line of the sawing machine; Figure 6 is the section of a detail illustrating the protective hood which prevents the access to the cutting tools of the sawing machine.

With reference to Figures 1 to 4, the sawing machine comprises a horizontal workpiece support table 1 presenting a straight longitudinal slot 2 defining the cutting line. On the workpiece support table 1 there is positioned the workpiece P, consisting usually of a package of stacked wood boards or the like. The sawing machine further comprises a pressure bar 3 arranged above the workpiece support table 1, which bar 3 can be raised and lowered with respect to the said workpiece support table 1. The pressure bar 3 consists of a longitudinal beam 103 supported by its ends in supports 8 and 9 provided at the ends of the cutting line, means being provided (not shown) for the raising and lowering of the said pressure beam 103. The pressure beam 103 is provided with a pair of lower longitudinal pressure lips 203 extending in the cutting direction on both sides of the slot 2, and defining a longitudinal groove. Upon starting of the machine, the pressure bar 3 is lowered so as to block with it pressure lips 203 the workpiece P on the table 1. When the pressure bar 3 has been lowered, there is immediately caused the raising of a main circular saw blade 4 and of a scoring tool 5, in the form of a rotating cutting disc or circular saw blade smaller than the main saw blade 4, mounted on a carriage 6 reciprocably movable along a path parallel to and beneath the cutting line defined by the slot 2, so that the said main saw 4 and scoring tool 5 are compelled to move along said slot 2 and effect the sawing of the stacked boards P, while the main saw 4 is at least partially received, during the said sawing operation, in the longitudinal groove defined by the downwardly directed pressure lips 203, as it can be appreciated in Figure 4.

When the sawing has been completed, the main saw 4 and scoring tool 5 are again lowered, and the carriage 6 is returned to its starting position. The pressure bar 3 is again lifted, and the cut boards can be removed or positioned for a further cutting operation. An arrangement of this type, known from the British Patent Specifications Nos. 1 232 800 and 1 426 623, ensures an exceptionally clean cut without splitting the cut edges, and renders unnecessary any subsequent treatment of the corners of the single panels obtained, even when handling wooden boards veneered on one or both sides, or coated with a plastic layer.

Whenever the package P of boards to be cut presents a width which is less than the length of the workpiece support table 1 of the sawing machine, as it is illustrated in Figure 2, the cutting tools 4 and 5 effect an initial portion of their movement in operative position (i.e. projecting above the slot 2) without engaging the package P, with the consequent possibility and danger that the operator may accidentally put his hands across the unoccupied zone of the cutting line (with consequent severe injuries), or that some other extraneous object be accidentally positioned along the said unoccupied zone of the cutting line, thus damaging the cutting tools.

As a safety measure in order to avoid the above risks, there may be used a protective apron operatively associated with the pressure beam 3 and which covers both sides of the cutting line defined by the slot 2. With particular reference to Figures 2, 3 and 4, at both longitudinal sides of the pressure bar 3 there are arranged, rotatably supported at their ends by the same upright supports 8 and 9 of the pressure bar 3, two parallel apron rods 7. The said apron rods 7 are preferably tubular and circular in section, and present a longitudinal channel 107 having the section of a sector of more than 180°, so that inside the said retaining channels 107 there may be slidably inserted the discs 110 provided at the ends of the apron slats 10 (see particularly Figure 5). The said apron slats 10, as shown in Figure 5, are preferably made of plastic material and, whenever inserted in series by their end discs 110 into the retaining channels 107 of the actuation rods 7, in close side-to-side contact, they define a continuous longitidinal protective apron which covers both sides of the cutting line. The rods 7 may be rotated around their longitudinal axis under the action of an actuation level 207 which is hinged to the stem of a piston sliding at the interior of a pneumatic cylinder 11 articulated to the frame of the machine and pneumatically connected to the same pneumatic circuits which control the movement of the pressure bar 3.

As it can be clearly appreciated from the Figures, the aperture of the retaining channels 107 of the apron rods 7 is such as to permit a predetermined amount of swinging of the slats 10 around the swinging axis defined by the said retaining channels 107. Whenever the pressure bar 3 is raised as shown in Figure 3, the apron rods 7 are rotated so that the barrier apron formed by the slats 10 on each side of the said pressure bar 3, is lifted by abutment of the slats 10 on one edge of the aperture of channel 107. In this manner, the cutting zone is freely accessible and visible by the operator.

Upon starting of the sawing operation, the pressure bar 3 is lowered, and simultaneously the apron rods 7 are rotated so as to bring the slats downwardly, as illustrated in Figure 4. From the said Figure 4 and from Figure 2, it clearly appears that in this lowered position the free ends of the slats 10 either abut against the package P of boards being sawn, or, in the points not occupied by the package P, they swing further downwardly and abut against the workpiece support table 1. In this manner, a continuous protective barrier is established on both sides of the cutting line defined by the slot 2.

A further safety device for avoiding two other types of accidents during the operation of the sawing machine may be used. A first accident may derive from the fact that the cutting tools 4 and 5 could start their sawing action prior to the safe clamping of the package P under the action of the pressure lips 203 of the pressure bar 3. Another accident may derive from the fact that the machine could be accidentally started when the operator's hands or other extraneous objects are positioned along the cutting line.

The safety device comprises two lateral hood-like elements 303 secured at both sides of the pressure bar 3 and extending for the whole length thereof, terminating at a level higher than the lower (contact) edge of the pressure lips 203 of the pressure bar 3. The hood elements 303 are connected to the sides of the pressure lips 203 by means of a plurality of transversal pins 13, equispaced along the length of the pressure bar. Hanging in the said transverse pins 12 there are provided, for each side of the pressure bar, two longitudinal contact bars 13 and 14. The said contact bars 13 and 14, which in the embodiment shown present a rectangular tubular section, may be each made of one single piece extending along the whole length of the pressure bar 3, or may be segmented into a plurality of pieces, whereby one segment or piece hangs on at least two successive transverse pins 12. The contact bars 13 and 14 on each side of the pressure bar are spaced between each other by means of a spacing sleeve 15 supported by the pin 12, and are guided for vertical movement by the guide plates 16 provided at the ends of each spacing sleeve 15, so that the contact bars 13 (outer contact bars) are vertically movable in a plane which is close to the side of the hood element 303, while the contact bars 14 (inner contact bars) are vertically movable in a plane which is close to the vertical pressure lips 203 of the pressure bar 3. The contact bars 13 (or segments) hang on the pins 12 by means of through slots 113 which are dimensioned in such a manner that, in the raised position of the pressure bar, shown in Figure 3, their lowermost extremity is located at the same level as the lowermost end of the pressure lips 203, while the contact bars 14 freely hang on the transverse pins 12 by means of through slots 114 which are dimensioned in such a manner that in the raised position of the pressure bar 3, their lowermost ends project downwardly beyond the ends of the adjoining pressure lips 203. Each contact bar (or segment) 13, 14 is provided with bracket elements 17 respectively 18 intended to cooperate with microswitches 19 respectively 20 upon lifting of the respective contact bars or segments, by abutting against said microswitches. The microswitches 19 and 20 are operatively inserted in the control circuit of the sawing machine, in such a manner that the cutting tools 4 and 5 can start their working cycle only when the pressure bar 3 has been properly lowered onto a package P and no extraneous body is interposed between the pressure bar 3 and the package P, as illustrated in Figure 4, so that the contact bars 14 has been pushed upwardly with their ends at the same level as the extremites of the pressure lips 203 (which is the top level of the package P), and consequently the microswitches 20 are actuated by the brackets 18, while the outer contact bars 13 are not pushed upwardly, and therefore the microswitches 19 are not actuated by the brackets 17.

In Figure 3 there is shown an abnormal or emergency condition in which an extraneous body L is present between the pressure bar 3 and the workpiece support table 1. In this case it appears evident that the extraneous body L acts on the outer contact bar 13 (either as a consequence of the movement of the said extraneous body L, or as a consequence of the lowering of the pressure bar 3) and practically pushes upwardly the said contact bar 13, thus causing the actuation (through the bracket 17) of the microswitch 19, which will interrupt the operation of the machine, and in any case avoid that the cutting tools 4 and 5 (which are rotating) be lifted through the slot 2 above the table 1.

With particular reference to Figure 6, there is shown another safety device which may be adopted in the sawing machine, for avoiding any accident to the operator whenever it is necessary, either for substitution or repair purposes, to inspect and touch the cutting tools 4 and 5. The access to the said cutting tools is only possible whenever they are at the starting position of a working cycle, i.e. in correspondence of one extremity of the sawing machine. In correspondence of this extremity, there is provided a protective hood 21, which closes the access aperture A to the said cutting tools. The said hood 21 is secured to the casing of the machine by means of threaded rod 22, which engages a female nut 24 provided on the machine casing. The threaded rod 22 can be screwed or unscrewed in position by means of a knob 23. Whenever the threaded rod 22 is screwed into locking position, same actuates, with its free end, a microswitch 25 which permits the operation of the motors of the tools 4 and 5. Whenever it is desired to have access to the said cutting tools 4 and 5, it will be necessary to remove the hood 21, which can be done by unscrewing the rod 22. The unscrewing of the said rod causes the stopping of the motors of the tools, through the microswitch 24. The complete unscrewing of the threaded portion of rod 22 (which is sufficiently long) takes a sufficiently long time to enable the cutting tools 4 and 5 to come to a complete stop.

As an additional safety measure, in order to avoid sparks from the possible contact of the rotating saw blades 4 and 5 with metal or hard parts of the slot 2 of the table 1, the said slot 2 may be defined by two longitudinal strips 26 of relatively soft material, such as wood or plastics.

Reference numeral 27 indicates a control panel board, which is mounted on a swinging arm above the workpiece support table, so that an immediate control of the machine can be performed by operators standing on either side of the said machine.

It is believed that the invention will have been clearly understood from the foregoing detailed description of some preferred embodiments. Changes in the details of construction may be made without departing from the invention, as above described and claimed hereafter.

**Claims**

1. A sawing machine of the type comprising a horizontal workpiece support table (1) having a straight longitudinal slot (2) defining a cutting line, a sawing tool (4) mounted on a carriage (6) reciprocably movable along a path parallel to and beneath the cutting line, and a longitudinal pressure bar (3) arranged above the said workpiece support table (1) which pressure bar (3) extends along the whole length of the cutting line and can be raised and lowered with respect to the said workpiece support table (1) so as to be capable of clamping thereon the workpiece (P) to be sawn, characterized in that a first safety device is provided, consisting of a protective barrier apron extending along both sides of the cutting line, said protective barrier apron being formed by a plurality of slats (10) hingedly mounted, with the possibility of swinging through a predetermined angle of movement on longitudinal apron rods (7) arranged at both sides of the said cutting line, a second safety device being further provided, consisting of a longitudinal inner contact bar (14) and a longitudinal outer contact bar (13) mounted on each side of the pressure bar (3) and hanging therefrom with the possibility of vertical movement with respect thereto, the said inner and outer contact bars (14, 13) being adapted to cooperate, following their lifting, with control devices (19, 20) acting on a control circuit to disconnect the power from at least the sawing tool (4).

2. A sawing machine according to claim 1, characterized in that the longitudinal apron rods (7) include a longitudinal retaining groove (105) at the interior of which there are slidably inserted, side-by-side, the apron slats (10) by means of suitable enlarged portions, such as discs (110) provided at one end thereof, the said retaining groove presenting an aperture which permits a limited movement of the apron slats (10) through a predetermined angle, around a longitudinal axis parallel to or coincident with the longitudinal axis of the apron rods (7).

3. A sawing machine according to claim 1, characterized in that actuation means (11, 207) are provided for producing a limited angular rotation of the apron rods (7) around their longitudinal axis, whereby it is possible to raise the apron slats to a position at which free access is given to the cutting line, or to lower the said apron slats (10) to a position at which they abut on the workpiece support table (1) and/or on the workpiece (P) being sawn.

4. A sawing machine according to claim 1, characterized in that the pressure bar (3) includes a pair of downwardly directed pressure lips (203) for clamping the workpiece (P) on the table (1), and the longitudinal inner contact bars (14) of the said second safety device are mounted in close proximity to the said pressure lips (203) on each side of the pressure bar, in such a manner that whenever the pressure bar is raised with respect to the workpiece (P), the said inner contact bars project with their lower end downwardly beyond the ends of the adjoining pressure lips, and the associated control devices (20) are not actuated, while in the lowered blocking position of the pressure bar (3) the said inner contact bars (14) are pushed upwardly by the contact with the workpiece (P) to be sawn, so that their lower ends are brought to the same level as the ends of the pressure lips (203) at the pressure bar (3) and the associated control devices (20) are actuated.

5. A sawing machine according to claim 4, characterized in that the longitudinal outer contact bars (13) are mounted at both sides of the pressure bar (3) at a certain distance therefrom in such a manner that whenever the pressure bar (3) is raised, the lower ends of the said outer contact bars (13) are at the same level as the ends of the pressure lips (203) of the pressure bar (3) and the associated control devices (19) are not actuated, while the presence of an extraneous body (L) between the pressure bar (3) and the workpiece support table (1) or the workpiece (P), causes the lifting of at least one of the said outer contact bars (13) either due to lowering of the pressure bar (3) or to upward movement of the said extraneous body, thus causing the actuation of the associated control devices.

6. A sawing machine according to claim 5, characterized in that the inner and outer contact bars (13, 14) are mounted, by means of vertical slots (113, 114) passing therethrough, on transversal pins (12) secured at one end to the outer side of the pressure lips (203) of the pressure bar (3) and at the other end to the iner side of a downwardly directed hood (303) secured to the pressure bar (3) and extending longitudinally for the whole length thereof.

7. A sawing machine according to claim 1, characterized in that it further comprises a third safety device consisting of a removable hood (21) for closing an aperture which gives access to the sawing tool (4), said hood (21) being secured to the casing of the machine by means of a threaded rod (22) engaging a female nut (24) provided on the casing, said threaded rod being operated through a manual knob, and acting, in its fully screwed condition, on a microswitch (25) permitting the operation of the motors of the sawing tool (4) while the unscrewing of the said threaded rod (22) disengages the end thereof from the said microswitch, the threaded rod having such a length that in use the complete unscrewing operation requires an amount of time sufficient to allow the sawing tool to come to a complete stop.

8. A sawing machine according to claim 1, characterized in that the sides of the longitudinal slot (2) defining the cutting line, are constructed of strips (26) made of relatively soft material, such as for example wood or plastics.

**Patentansprüche**

1. Sägemaschine, bei der ein horizontaler Werkstücktisch (1) einen durchgehenden Längsschlitz (2) aufweist, der eine Schnittlinie bestimmt, ein Sägewerkzeug (4) auf einem Wagen (6) montiert ist, der auf einem parallel zu und unterhalb der Schnittlinie verlaufenden Führungsweg hin- und her verstellbar ist und ein Längs- Druckbalken (3) über dem Werkstücktisch (1) angeordnet ist, welcher Druckbalken (3) über die gesamte Länge der Schnittlinie reicht und gegenüber dem Werkstücktisch gehoben und gesenkt werden kann, um das zu sägende Werkstück (P) auf diesem festzuklemmen, dadurch gekennzeichnet, daß eine erste Sicherheitseinrichtung vorgesehen ist, die aus je einer Schutzjalousie an beiden Seiten der Schnittlinie besteht, welche Schutzjalousie aus einer Vielzahl von Lamellen (10) gebildet ist, die über einen vorbestimmten Winkelbereich schwenkbar an beidseits der Schnittlinie in Längsrichtung angeordneten Tragstäben (7) montiert sind, und daß eine zweite Schutzeinrichtung vorgesehen ist, die aus je einem inneren längsverlaufenden Kontaktbalken (14) und einem äußeren längsverlaufenden Kontaktbalken (13) an den beiden Seiten des Druckbalkens (3) besteht, die vom Druckbalken hängen und gegenüber diesem eine Vertikalbewegung ausführen können, welche inneren und äußeren Kontaktbalken (14, 13) dafür bestimmt sind, bei ihrem Anheben mit Steuervorrichtungen (19, 20) zusammenzuwirken, die über einen Steuerkreis wenigstens das Sägewerkzeug (4) abschalten.

2. Sägemaschine nach Anspruch 1, dadurch gekennzeichnet, daß die in Längsrichtung angebrachten Jalousietragstäbe (7) eine in Längsrichtung verlaufende Haltenut (105) aufweisen, in die die Jalousielamellen (10) nebeneinander mit entsprechend vorgrößerten Bereichen, beispielsweise an einem ihrer Enden angebrachten Scheiben (110) gleitverstellbar eingesetzt sind, wobei die Öffnung der Haltenut eine begrenzte Schwenkverstellung der Jalousielamellen (10) über einen vorbestimmten Winkel um eine Längsachse zuläßt, die zur Längsachse des Tragstabes (7) parallel ist oder mit dieser zusammenfällt.

3. Sägemaschine nach Anspruch 1, dadurch gekennzeichnet, daß Betätigungseinrichtungen (11, 207) zur Erzeugung einer begrenzten Drehbewegung der Jalousietragstäbe (7) um ihre Längsachse vorgesehen sind, so daß die Jalousielamellen (10) in eine Stellung, in der die Schnittlinie frei zugängig ist, angehoben oder in eine Stellung abgesenkt werden können, in der die Lamellen am Werkstücktisch (1) und/oder am gesägten Werkstück (P) anliegen.

4. Sägemaschine nach Anspruch 1, dadurch gekennzeichnet, daß der Druckbalken (3) zwei nach unten weisende Druckstege (203) zum Festklemmen des Werkstückes (P) am Tisch (1) aufweist und die in Längsrichtung verlaufenden inneren Kontaktbalken (14) der zweiten Sicherheitseinrichtung an den beiden Seiten des Druckbalkens in unmittelbarer Nähe dieser Druckstege (30) in der Weise montiert sind, daß beim Anheben des Druckbalkens gegenüber dem Werkstück (P) die inneren Kontaktbalken mit ihren unteren Enden nach unten über die Enden der benachbarten Druckstege vorstehen und die zugeordneten Steuereinrichtungen nicht betätigt werden, wogegen in der abgesenkten Klemmstellung des Druckbalkens (3) die inneren Kontaktbalken (14) durch den Eingriff mit dem zu sägenden Werkstück (P) nach oben geschoben werden, so daß ihre unteren Enden auf gleiche Höhe mit den Enden der Druckstege (203) des Druckalkens (3) gebracht und die zugeordneten Steuereinrichtungen (20) betätigt werden.

5. Sägemaschine nach Anspruch 4, dadurch gekennzeichnet, daß die in Längsrichtung angebrachten äußeren Kontaktbalken (13) in einem bestimmten Abstand von den beiden Seiten des Druckbalkens (3) in der Weise montiert sind, daß bei jedem Anheben des Drukbalkens (3) die unteren Enden der äußeren Kontaktbalken (13) auf gleicher Höhe mit den Enden der Druckstege (203) des Druckbalkens liegen und die zugeordneten Steuereinrichtungen (19) nicht betätigt werden, wogegen das Vorhandensein eines Fremdkörpers (L) zwischen dem Druckbalken (3) und dem Werkstücktisch (1) oder dem Werkstück (P) zu einem Anheben wenigstens eines der äußeren Kontaktbalken (13) entweder zufolge des Absenkens des Druckbalkens (3) oder zufolge einer Aufwärtsbewegung des Fremdkörpers führt, so daß die zugehörigen Steuereinrichtungen betätigt werden.

6. Sägemaschine nach Anspruch 5, dadurch gekennzeichnet, daß die inneren und äußeren Kontaktbalken (13) mit Hilfe durchgehender, vertikaler Schlitze (113, 114) auf Querstiften (12) montiert sind, die mit ihrem einen Ende an der Außenseite der Druckstege (203) des Druckbalkens (3) und mit ihrem anderen Ende an der Innenseite einer nach unten weisenden Schutzhaube (303) befestigt sind, die ihrerseits am Druckbalken (3) befestigt ist und sich der Länge nach über dessen volle Länge erstreckt.

7. Sägemaschine nach Anspruch 1, dadurch gekennzeichnet, daß eine dritte Sicherheitseinrichtung vorgesehen ist, die aus einer abnehmbaren Schutzhaube (21) zum Abschluß einer den Zugang zum Sägewerkzeug (4) freigenbenden Öffnung besteht, welche Haube (21) am Maschinengehäuse mit Hilfe eines Gewindestabes (22) befestigt ist, der in ein Muttergewinde (24) am Gehäuse eingreift, über einen Handknopf betätigbar ist und in seiner voll festgeschraubten Stellung auf einen Mikroschalter (25) wirkt, der den Betrieb der Motoren des Sägewerkzeuges (4) zuläßt, wogegen das Herausschrauben des Gewindestabes (22) sein Ende außer Eingriff mit dem Mikroschalter bringt, wobei der Gewindestab eine solche Länge aufweist, daß beim Betrieb das Herausschrauben eine hinreichend lange Zeit benötigt, um es dem Sägewerkzeug zu ermöglichen zum vollständigen Stillstand zu gelangen.

8. Sägemaschine nach Anspruch 1, dadurch gekennzeichnet, daß die Seiten des die Schnittlinie bestimmenden Längsschlitzes (2) aus Streifen (26) aufgebaut sind, die aus einem verhältnismäßig weichen Material, beispielsweise Holz oder Plastik bestehen.

**Revendications**

1. Machine à scier, du type comprenant une table horizontale (1) formant support pour la pièce à scier et ayant une fente longitudinale rectiligne (2) définissant une ligne de coupe, un outil de sciage (4) monté sur un chariot (6) qui peut aller et venir le long d'un trajet parallèle à la ligne de coupe et se trouvant endessous de celle-ci, et une barre de pression longitudinale (3) disposée au-dessus de ladite table formant support (1) pour la pièce à scier, cette barre de pression (3) s'étendant sur toute la longueur de la ligne de coupe et pouvant être élevée et abaissée par rapport à la table formant support (1) pour la pièce à scier de manière à être susceptible de serrer sur celle-ci la pièce (P) à scier, caractérisée en ce qu'un premier dispositif de sécurité est prévu, consistant en un tablier protecteur formant barrière s'étendant le long des deux côtés de la ligne de coupe, ledit tablier protecteur formant barrière étant formé par plusieurs volets (10) montés par charnière, avec la possibilité de basculer d'un angle déterminé à l'avance par rapport à des tiges longitudinales (7) de tablier disposées des deux côtés de ladite ligne de coupe, un deuxième dispositif de sécurité étant en outre prévu et consistant en une barre intérieure longitudinale de contact (14) et en une barre longitudinale extérieure de contact (13) montée de chaque côté de la barre de pression et pendant de celle-ci avec la possibilité de mouvement vertical par rapport à celle-ci, lesdites barres intérieure et extérieure de contact (14, 13) étant adaptées pour coopérer, après leur levée, avec des dispositifs de commande (19, 20) agissant sur le circuit de commande pour qu'au moins l'outil de sciage (4) cesse d'être alimenté en force motrice.

2. Machine à scier selon la revendication 1, caractérisée en ce que les tiges longitudinales (7) de tablier comprennent une gorge longitudinale de retenue (105) à l'intérieur de laquelle sont insérés à glissement côte-à-côte les volets (10) de tablier au moyen de portions agrandies convenables, telles que des disques (110) prévus à l'une de leurs extrémités, ladite gorge de retenue présentant une ouverture qui permet un mouvement limité des volets (10) de tablier, sur un angle déterminé à l'avance, par rapport à un axe longitudinal parallèle à l'axe longitudinal des tiges (7) de tablier ou coïncidant avec celui-ci.

3. Machine à scier suivant la revendication 1, caractérisée en ce que des moyens d'actionnement (11, 207) sont prévus pour produire une rotation angulaire limitée des tiges (7) de tablier par rapport à leur axe longitudinal, de manière à ce qu'il soit possible d'élever les volets de tablier jusqu'à une position qui donne un accès libre à la ligne de coupe, ou d'abaisser lesdits volets (10) de tablier en une position où ils viennent en butée sur la table formant support (1) pour la pièce et/ou sur la pièce (P) à scier.

4. Machine à scier selon la revendication 1, caractérisée en ce que la barre de pression (3) comprend deux lèvres de pression (203) dirigées vers le bas pour serrer la pièce (P) sur la table (1), et lesdites barres longitudinales intérieures de contact (14) dudit second dispositif de sécurité sont montées à proximité immédiate desdites lèvres de pression (203) de chaque côté de la barre de pression, de manière à ce que, quand la barre de pression est élevée par rapport à la pièce (P), lesdites barres intérieures de contact fassent saillie par leur extrémité intérieure vers le bas au-delà des extrémités des lèvres de pression adjacentes et à ce que les dispositifs associés de commande (20) ne soient pas actionnés, tandis que dans la position abaissée de blocage de la barre de pression (3) lesdites barres intérieures de contact (14) sont poussées vers le haut par le contact avec la pièce (P) à scier de manière à mettre leur extrémité inférieure au même niveau que les extrémités des lèvres de pression (203) de la barre de pression (3) et à actionner les dispositifs associés de commande (20).

5. Machine à scier selon la revendication 4, caractérisée en ce que les barres longitudinales extérieures de contact (13) sont montées des deux côtés de la barre de pression (3) à une certaine distance de celle-ci de manière à ce que, quand la barre de pression (3) est élevée, les extrémités inférieures desdites barres extérieures de contact (13) soient au même niveau que les extrémités des lèvres de pression (203) de la barre de pression (3) et à ce que les dispositifs associés de commande (19) ne soient pas actionnés, tandis que la présence d'un corps étranger (L) entre la barre de pression (3) et la table formant support (1) pour la pièce ou la pièce (P) provoque la levée de l'une au moins desdites barres de contact extérieures (13) en raison de l'abaissement de la barre de pression (3) ou du mouvement vers le haut dudit corps étranger, provoquant ainsi l'actionnement des dispositifs associés de commande.

6. Machine à scier selon la revendication 5, caractérisée en ce que les barres intérieure et extérieure de contact (13, 14) sont montées, au moyen de fentes verticales (113, 114) les traversant, sur des goupilles transversales (12) fixées à une extrémité au côté extérieur des lèvres de pression (203) de la barre de pression (3) et à l'autre extrémité au côté intérieur d'un capot (303) dirigé vers le bas, fixé à la barre de pression (3) et s'étendant longitudinalement sur toute la longueur de celle-ci.

7. Machine à scier selon la revendication 8, caractérisée en ce qu'elle comprend en outre un troisième dispositif de sécurité consistant en un capot (21) amovible pour fermer une ouverture qui donne accès à l'outil de sciage (4), ledit capot (21) étant fixé au bâti de la machine à l'aide d'une tige filetée (22) coopérant avec un écrou femelle (24) prévu sur le bâti, ladite tige filetée étant mise en fonctionnement par l'intermédiaire d'un bouton à manoeuvre manuelle et agissant, lorsqu'elle est à l'état entièrement vissé, sur un microinterrupteur (25) permettant le fonctionnement des moteurs de l'outil de sciage (4), tandis que le dévissage de ladite tige filetée (22) met hors de contact l'extrémité de celle-ci et ledit micro-interupteur, cette tige filetée ayant une longueur telle qu'en utilisation l'opération de dévissage complet exige une durée suffisante pour permettre à l'outil de sciage de s'arrêter complètement.

8. Machine à scier selon la revendication 1, caractérisée en ce que les côtés de la fente longitudinale (2) définissant la ligne de coupe sont constitués de bandes (26) en matière relativement tendre, telle que par exemple en bois ou en matières plastiques.

*Fig.1*

*Fig.2*

*Fig.5*

*Fig.6*

Fig.3

Fig.4

0019 292